# EUROPEAN PATENT APPLICATION

(11) **EP 3 989 417 A1**
(43) Date of publication of application: **27.04.2022**
(21) Application number: 21201882.4
(22) Date of filing: 11.10.2021
(51) Int. Cl.: H02K 11/33, H02K 5/18, H02K 5/15, H02K 5/173, H02K 5/10, H02K 9/22, H02K 9/06

(54) **DRIVING DEVICE**

(30) Priority: 22.10.2020 JP 2020177456
(71) Applicant: KANZAKI KOKYUKOKI MFG. CO., LTD., Hyogo 661-0981 (JP)
(72) Inventor: Nakamura, Yusuke, Hyogo (JP); Nakagawa, Shigeaki, Hyogo (JP); Kamada, Tatsuya, Hyogo (JP); Arata, Masato, Hyogo (JP); Kochidomari, Yoshitaka, Hyogo (JP); Kita, Kousaku, Hyogo (JP); Tanaka, Yujiro, Hyogo (JP)
(74) Representative: Isarpatent

(57) **Abstract**

In a driving device (1) according to the present invention, an internal space of a fixed housing (6) provided with an electric motor (3) and a electric circuit board (4) configured to control drive of the electric motor (3) is partitioned into a first chamber (61) arranged therein with the electric motor (3) and a second chamber (62) arranged therein with the electric circuit board (4). The driving device (1) includes a heat dissipation part configured to efficiently dissipate heat generated from the electric circuit board (4), from the second chamber (62) to the outside of the fixed housing (6), and thus, heat generated from the electric motor (3) is not easily transmitted to the second chamber (62) via the fixed housing (6), and moisture is prevented from entering the fixed housing (6) when outside air flows into the fixed housing (6).

## Description

### BACKGROUND OF THE INVENTION

### Field of the Invention

The present invention relates to a driving device including an electric motor and an electric circuit board arranged inside a motor housing.

### Related Art

For example, Japanese Unexamined Patent Application Publication No. 2019-158031 discloses a driving device including an electric motor and an electric circuit board arranged inside a motor housing, and a reduction mechanism configured to decelerate the rotation power of the electric motor and transmits the decelerated rotation power to a drive wheel and is arranged inside the drive wheel rotatably supported with respect to the motor housing.

Such a driving device can be utilized, for example, as a driving device for a crawler traveling device.

For example, Japanese Unexamined Patent Application Publication No. 2004-15956 describes a configuration in which a brushless type electric motor and an electric circuit board are arranged inside a housing, a relatively large fan configured to rotate in synchronization with a rotation of the electric motor is arranged between the electric motor and the electric circuit board, and a fan cover is arranged between the fan and the electric circuit board.

In paragraph 0028 of Japanese Unexamined Patent Application Publication No. 2004-15956, it is stated that "the air agitated by the fan 4 recirculates in the electric motor and the entire electric circuit board, and thus, a lower of the temperature rise in the electric motor is achieved".

Electric motors may generate heat of 100°C or more, due to their characteristics according to drive conditions. The increase in heat generation in the electric circuit board is about 80 to 90°C. In Japanese Unexamined Patent Application Publication No. 2019-158031 described above, if both the electric motor and the electric circuit board are arranged inside the electric motor housing, there is concern that the heat generated by the electric motor may affect an operation of the electric circuit board.

In Japanese Unexamined Patent Application Publication No. 2004-15956 described above, a large separation portion is ensured between the brushless type electric motor and the electric circuit board part in the central axis direction, and a relatively large fan and fan cover are arranged in the separation portion, and thus, the size of the entire device increases in the rotor axis direction.

### SUMMARY OF THE INVENTION

In view of these circumstances, an object of the present invention is to provide a driving device including an electric motor and an electric circuit board arranged inside a motor housing, where the driving device is suppressed from a size increase in a rotor axis direction and is not affected by a temperature rise in the electric motor.

### BRIEF DESCRIPTION OF THE DRAWINGS

FIG. 1 is a cross-sectional view illustrating a first embodiment of a driving device according to the present invention.
FIG. 2 is a perspective view partially illustrating a crawler traveling device in which the driving device of FIG. 1 is used in an example.
FIG. 3 is a perspective view illustrating an appearance of a fixed housing of FIG. 1.
FIG. 4 is a cross-sectional view of a part of FIG. 1 cut in a phase different from that of FIG. 1.
FIG. 5 is a diagram for describing a power transmission path of a reduction mechanism part of FIG. 1.
FIGS. 6A and 6B are a perspective view illustrating a single structure of a mesh plate for temperature adjustment of FIG. 1, in which FIG. 6A illustrates one embodiment of the mesh plate, and FIG. 6B illustrates another embodiment of the mesh plate.
FIG. 7 is a cross section view taken along line (7)-(7) in FIG. 4, viewed from the direction of the arrow.
FIG. 8 is a perspective view separately illustrating a partition plate, the mesh plate, and an electric circuit board of FIG. 1.
FIG. 9 is a cross-sectional view illustrating a second embodiment of the driving device according to the present invention.
FIG. 10 is a cross-sectional view illustrating a third embodiment of the driving device according to the present invention.
FIG. 11 is a cross section view taken along line (11)-(11) in FIG. 10, viewed from the direction of the arrow.
FIG. 12 is a cross-sectional view illustrating a fourth embodiment of the driving device according to the present invention.
FIG. 13 is a cross-sectional view illustrating a fifth embodiment of the driving device according to the present invention.

### DETAILED DESCRIPTION OF THE PREFERRED EMBODIMENTS

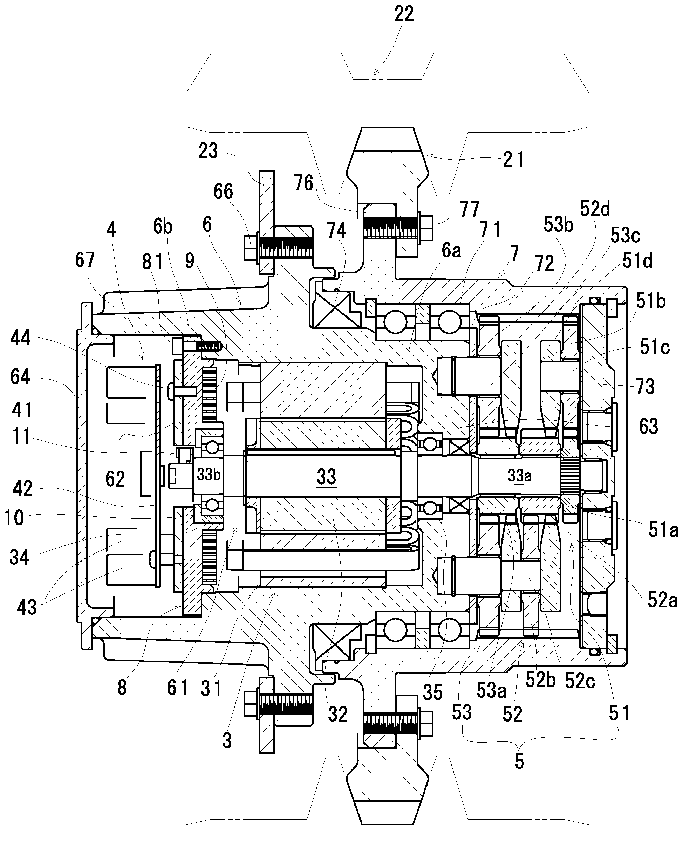

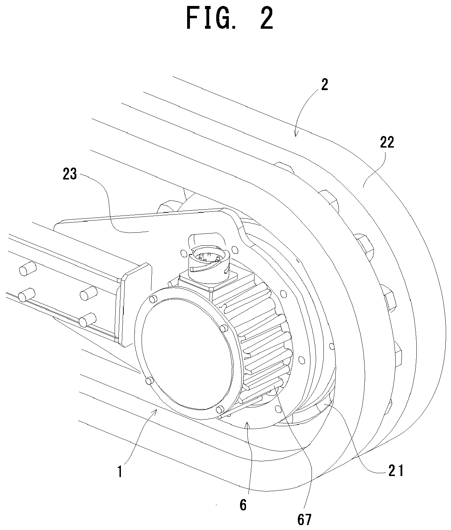

Below, most preferred embodiments for carrying out the present invention will be described in detail with reference to the accompanying drawings. FIGS. 1 to 8 illustrate an embodiment of the present invention. In the drawings, reference numeral 1 indicates a driving device in its entirety. The driving device 1 is incorporated in a drive wheel 21 of a traveling device 2 in a crawler vehicle as illustrated in FIG. 2, for example, and generates rotation power to feed and move an endless crawler belt 22 engages the drive wheel 21. The driving device 1 according to the present embodiment includes an electric motor 3, an electric circuit board 4, a reduction mechanism part 5, a fixed housing 6, a rotating housing 7, and the like.

A flange part 65 extending outward in a radial direction is integrally provided on an outer periphery at a substantially central position in a width direction of the fixed housing 6. The flange part 65 is fixed to, for example, a part of a frame 23 of the crawler traveling device 2 by a fastening member (for example, a bolt 66).

A peripheral wall 6a having a cylindrical shape is formed to project at the right side, on the sheet of the drawing, of the flange part 65 of the fixed housing 6, and an end wall 63 is integrally provided at an end portion of the peripheral wall 6a. The end wall 63 is formed in an annular shape to extend inward in the radial direction, and includes an opening at a center portion for inserting a rotor shaft 33 of the electric motor 3. An internal space surrounded by the peripheral wall 6a and the end wall 63 is referred to as a first chamber 61.

A peripheral wall 6b having a cylindrical shape is formed to project at the left side, on the sheet of the drawing, of the flange part 65 of the fixed housing 6, an end portion of the peripheral wall 6b is opened, and a first lid 64 is detachably attached to the peripheral wall 6b.

A partition plate 8 is attached inside the fixed housing 6 by a fastening member (for example, a bolt 81). The partition plate 8 divides the internal space of the fixed housing 6 into the first chamber 61 and a second chamber 62.

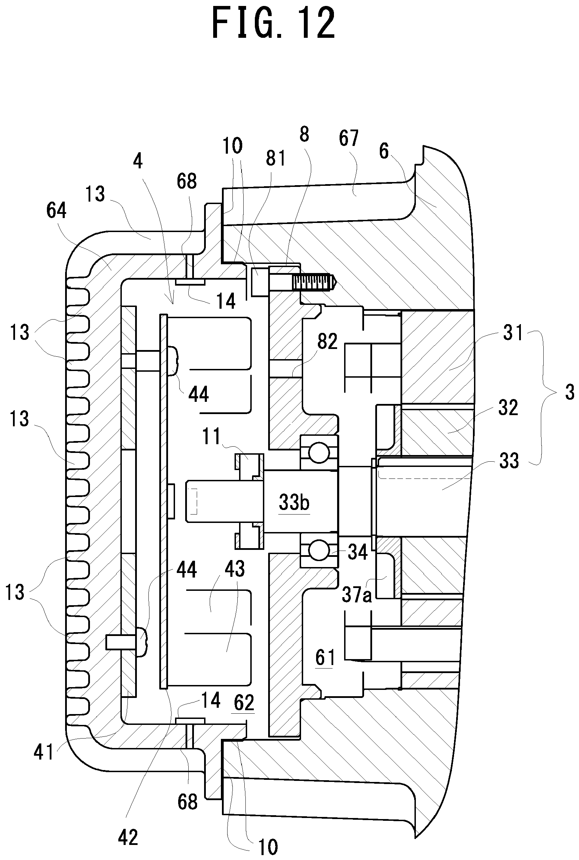

The electric motor 3 is accommodated in the first chamber 61, and the electric circuit board 4 is accommodated in the second chamber 62. In the present embodiment, the second chamber 62 is laterally adjacent to the first chamber 61 along a rotor axis direction of the electric motor 3. The second chamber 62 may be arranged in a direction perpendicular to the rotor axis direction to be positioned above and adjacent to the first chamber 61. This will be described in detail later in FIG. 12.

The electric motor 3 is a brushless type configured to generate rotation power, and includes a stator 31, a rotor 32, and the rotor shaft 33. The stator 31 is fixed to an inner periphery of the fixed housing 6 and includes a coil. The rotor 32 is fixed to an outer periphery of the rotor shaft 33.

One end portion of the rotor shaft 33 is rotatably supported on an inner periphery of a central opening of the partition plate 8, via a bearing 34. The other end portion of the rotor shaft 33 is rotatably supported via a bearing 35 arranged at a center of the end wall 63 of the fixed housing 6.

A first weight 37 and a second weight 38 are externally fitted to and mounted on one end side and the other end side of the rotor 32 in the rotor shaft 33. The first and second weights 37 and 38 adjust the rotational balance of the rotor shaft 33, and are formed as annular plates, for example.

The electric circuit board 4 is a motor driver configured to electrically control the drive of the electric motor 3, and in the present embodiment, the electric circuit board 4 is comprised by a first circuit board 41 and a second circuit board 42 apposed and electrically connected. Various types of electronic components 43 are mounted on an outer surface of the second circuit board 42. Various types of electronic components are also mounted on the first circuit board 41, which are not illustrated.

The first circuit board 41 is attached to a surface of the partition plate 8 facing the side of the electric circuit board 4, by a fastening member (for example, a bolt 44).

Next, the reduction mechanism part 5 to decelerate the rotation of the rotor shaft 33 of the electric motor 3 and transmit the decelerated rotation to the rotating housing 7 is arranged inside the rotating housing 7. A flange part 76 extending outward in the radial direction is integrally provided on the outer periphery of the rotating housing 7. For example, the drive wheel 21 of the crawler traveling device 2 is attached to the flange part 76 by a fastening member (for example, a bolt 77).

The rotating housing 7 is composed of a cylindrical member having openings on one end side and the other end side in the rotor axis direction and the opening on the other end side (left side on the FIG.1) is rotatably fitted to an outer periphery of the peripheral wall 6a of the fixed housing 6 via two rows of bearings 71.

A movement of the two rows of bearings 71 in the rotor axis direction is restricted by a stopper plate 72 attached to a surface of the end wall 63 facing the reduction mechanism part 5.

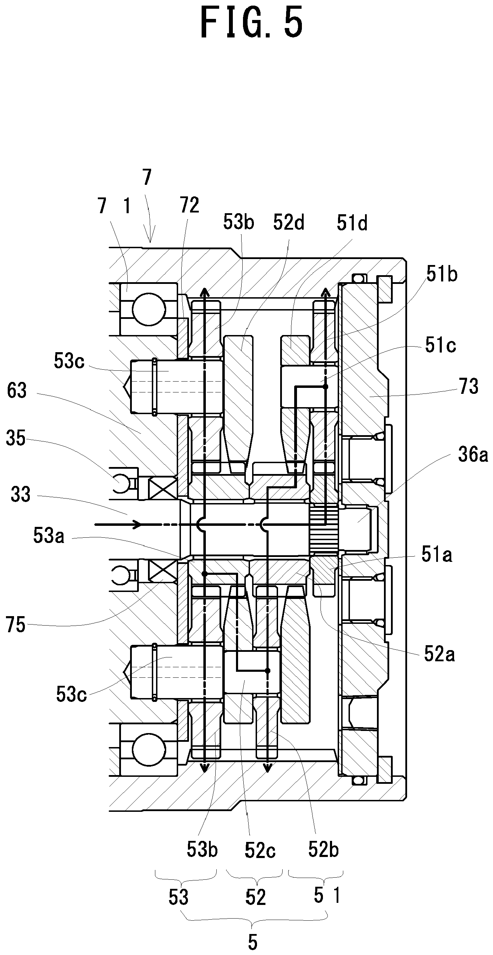

A second lid 73 is attached to the opening on the one end side (right side on the FIG. 1 and FIG. 5) of the rotating housing 7 in a rotation axis direction. A tip end portion of an extended part 33a of the rotor shaft 33 is rotatably supported by the second lid 73 via a bearing 35.

The internal space of the rotating housing 7 is sealed by the second lid 73 and the fixed housing 6 via first and second sealing members 74 and 75. A predetermined amount of lubricating oil (not illustrated) lubricating a friction region of each constituent component of the reduction mechanism part 5 is enclosed in the sealed internal space.

The first sealing member 74 is attached between the other end side of the inner peripheral surface of the rotating housing 7 in a central axis direction and a region of the outer peripheral surface of the fixed housing 6 corresponding to the second chamber 62. As illustrated in FIGS. 5, the second sealing member 75 is attached between an inner hole of the end wall 63 of the fixed housing 6 and the extended part 33a of the rotor shaft 33 to prevent the lubricating oil from entering into the fixed housing 6.

The fixed housing 6, the first lid 64, the second lid 73, and the partition plate 8 are molded of an aluminum-based metal material, for example. The rotating housing 7 is molded of an iron-based metal material, for example. The first and second weights 37 and 38 are molded of brass, for example. A metal material having good thermal conductivity, such as an aluminum alloy, is used for the main bodies of the first and second circuit boards 41 and 42 of the electric circuit board 4.

The reduction mechanism part 5 includes three stages of planetary gear mechanisms 51, 52, and 53. In the present embodiment, the first-stage planetary gear mechanism 51, the second-stage planetary gear mechanism 52, and the third-stage (final-stage) planetary gear mechanism 53 are sequentially provided from an upstream side in a power transmission direction from the rotor shaft 33 of the electric motor 3 to the rotating housing 7.

Next, a path for transmitting power by the reduction mechanism part 5 will be described with reference to FIG. 5. When a sun gear 51a of the first-stage planetary gear mechanism 51 fixed to a tip end of the rotor shaft 33 is rotated by drive of the electric motor 3, a planet gear 51b meshed with the sun gear 51a revolves around the sun gear 51a while rotating.

A carrier 51d configured to rotate in synchronization with the revolution of the planetary gear 51b rotates a sun gear 52a of the second-stage planetary gear mechanism 52 rotatably supported to the rotor shaft 33, and a planetary gear 52b meshed with the sun gear 52a revolves around the sun gear 52a while rotating.

A carrier 52d configured to rotate in synchronization with the revolution of the planetary gear 52b rotates a sun gear 53a of the third-stage planetary gear mechanism 53 rotatably supported to the rotor shaft 33. A planetary gear 53b meshes with the sun gear 53a. Here, a planetary gear shaft 53c supporting the planetary gear 53b is fixed to the fixed housing 6, and thus, the planetary gear 53b rotates without revolving. Therefore, the rotating housing 7 meshing with the planetary gear 53b is rotated.

According to such a configuration, the rotation power of the rotor shaft 33 is decelerated in three stages and transmitted to the rotating housing 7, as illustrated by thick arrows in FIG. 5.

Next, the following configuration is adopted in the driving device 1 of the present embodiment, with the object of suppressing an increase in size of the rotor shaft 33 in the axis direction in the fixed housing 6 and preventing a temperature rise in the electric motor 3 from affecting the driving device 1.

### (A1) First heat dissipation part

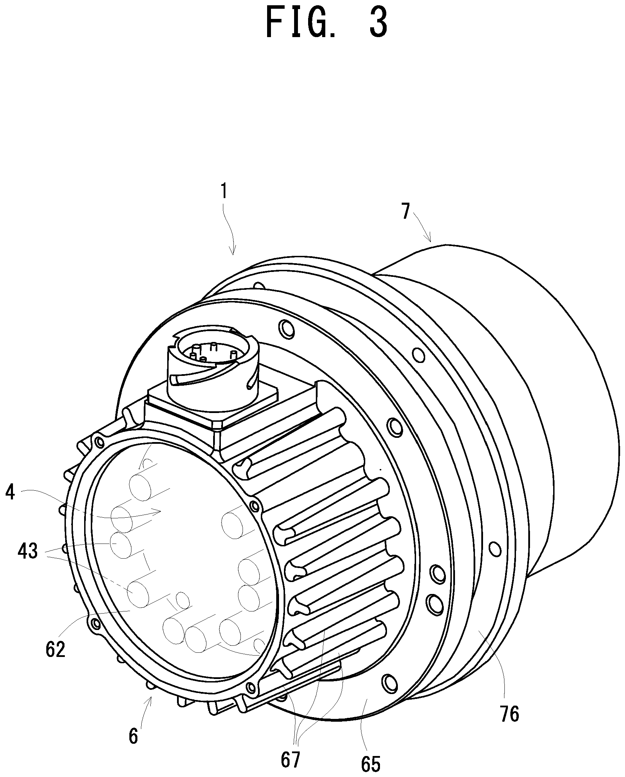

Fins 67 serving as a first heat dissipation part are provided on the outer periphery of the peripheral wall 6b corresponding to the second chamber 62 of the fixed housing 6. As illustrated in FIG. 3, the fins 67 are integrally formed with the fixed housing 6 at several locations in a circumferential direction. In the present embodiment, the fins 67 are extended on the peripheral wall 6b beyond a mounting position of the partition plate 8 to a region corresponding to the first chamber 61. If a heat dissipation surface area of the first heat dissipation part is to be increased, it is preferable to further provide fins also on the outer surface of the first lid 64 mounted on the fixed housing 6. The heat generated by the electric motor 3 is transmitted to the fixed housing 6 and released from the fins 67 to the outside air.

### (A2) Temperature adjusting part

A mesh plate 9 having an annular shape and functioning as a temperature adjusting part is attached to a surface (an inner surface) facing the first chamber 61, in the partition plate 8 attached with the electric circuit board 4.

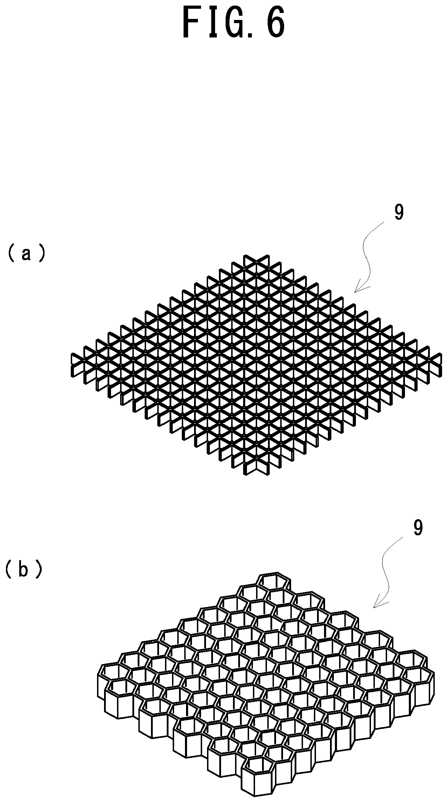

The mesh plate 9 is molded from a metal material having good thermal conductivity such as an aluminum alloy, and a grid-shaped mesh as illustrated in FIG. 6A is used to increase the surface area of the mesh plate 9 as much as possible. As illustrated in FIG. 6B, the mesh plate 9 may be a honeycomb-shaped mesh.

Such a mesh plate 9 functions to reduce a temperature difference in a situation where a difference occurs between the air temperature in the first chamber 61 and the air temperature in the second chamber 62.

For example, if the air temperature in the first chamber 61 is higher than the air temperature in the second chamber 62, the mesh plate 9 absorbs the heat in the first chamber 61 and efficiently releases the absorbed heat to the second chamber 62 via the partition plate 8. Alternatively, if the air temperature in the second chamber 62 is higher than the air temperature in the first chamber 61, the heat in the second chamber 62 is absorbed by the mesh plate 9 via the partition plate 8 and efficiently released to the first chamber 61.

### (A3) First blower fan and through hole

Several locations of the first weight 37 mounted near the partition plate 8 of the rotor shaft 33 are cut out in the circumferential direction to provide a first blower fan 37a. The first blower fan 37a may be formed by cutting and processing an outer peripheral surface of the rotor shaft 33.

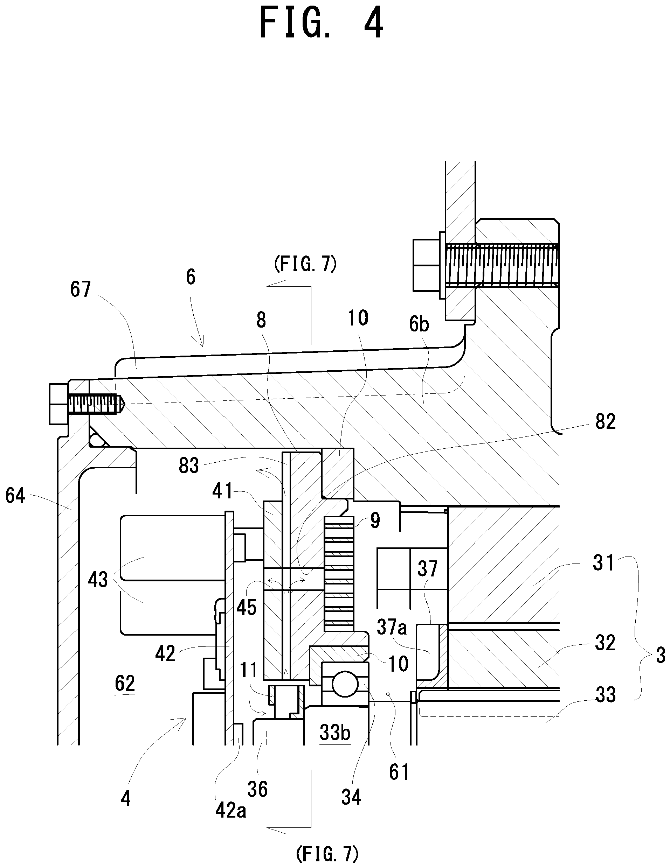

As illustrated in FIGS. 4, 7, and 8, through holes 82 are provided at several locations in the circumferential direction of the partition plate 8. Through holes 45 are also provided at several locations in the circumferential direction of the first circuit board 41. The through holes 82 penetrate the partition plate 8 to be parallel to the rotor axis direction. The through holes 45 penetrate the first circuit board 41 to be parallel to the rotor axis direction.

Subsequently, as illustrated in FIG. 4, when the first circuit board 41 is attached to the partition plate 8, the through holes 45 of the first circuit board 41 and the through holes 82 of the partition plate 8 form continuous passages via which the inside of the first chamber 61 and the inside of the second chamber 62 communicate with each other. A conducting wire (not illustrated) connecting the coil (not illustrated) of the stator 31, the first circuit board 41, and the second circuit board 42 is inserted into some of the plurality of through holes 82 and 45.

The first blower fan 37a agitates the air inside the first chamber 61 by the rotation of the rotor shaft 33. The agitated air flows to the second chamber 62 via the through holes 82 and 45, and then returns from the second chamber 62 to the first chamber 61 via other ones of the through holes 82 and 45. The difference between the temperature in the first chamber 61 and the temperature in the second chamber 62 is suppressed by the forced air circulation by the first blower fan 37a. The first blower fan 37a efficiently transmits the heat in the first chamber 61 to the fixed housing 6.

### (A4) Heat insulating material

The bearing 34 for supporting the rotor shaft 33 in the partition plate 8 is not directly fitted into a hole of the partition plate 8, because an inner diameter of a fitting hole is formed larger than an outer diameter of the bearing 34 in the partition plate 8, and a heat insulating material 10 having an L-shaped cross section is interposed between the bearing 34 and the partition plate 8. A ring-shaped heat insulating material is also provided on a mounting surface of the partition plate 8 in the fixed housing 6, to be interposed between the fixed housing 6 and the partition plate 8. The heat insulating material 10 is formed of a material having high hardness and high strength, such as cement or resin.

These heat insulating materials 10 suppress or prevent heat transmitted from the electric motor 3 to the rotor shaft 33 or heat transmitted from the electric motor 3 to the fixed housing 6 from being transmitted to the partition plate 8.

### (A5) Second blower fan

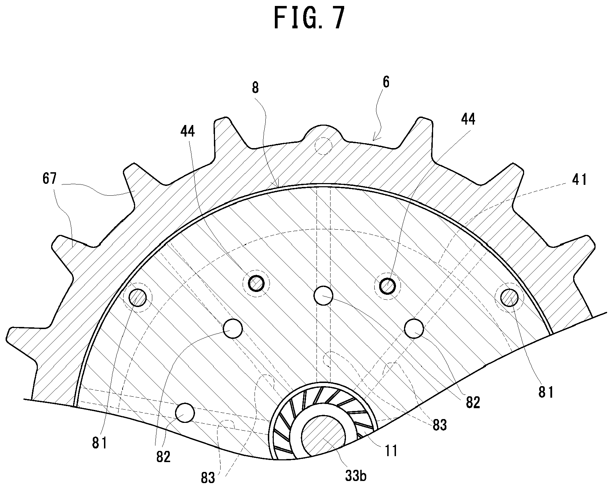

One end side of the rotor shaft 33 extends into the central openings provided in the partition plate 8 and the first circuit board 41. As illustrated in FIGS. 4 and 7, a centrifugal type second blower fan 11 is mounted in the outer periphery of the extended part 33b. The fan 11 may be formed by cutting and processing the outer peripheral surface of the extended part of the rotor shaft 33.

As illustrated in FIGS. 4, 7, and 8, an outer surface of the partition plate 8 is provided with grooves 83 configured to extend radially between an outer peripheral surface of the partition plate 8 and an inner peripheral surface of the central opening. When the first circuit board 41 is attached to the partition plate 8, the grooves 83 are covered with a flat outer surface of the first circuit board 41 to form an air flow passage.

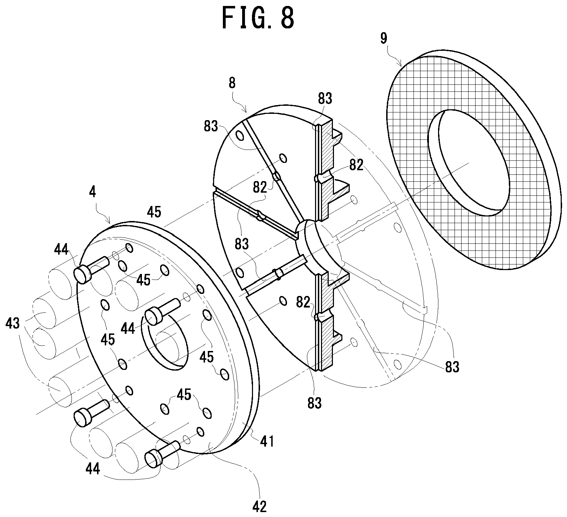

In the present embodiment, as illustrated in FIG. 8, the through holes 82 described in the above constituent component (A3) communicate with the grooves 83.

According to such a configuration, if the rotor shaft 33 rotates, the second blower fan 11 rotates in synchronization with the rotor shaft 33 to agitate the air in the second chamber 62, and air is transferred toward the inner peripheral surfaces of the central openings of the partition plate 8 and the first circuit board 41. As a result, the air is moved to the outer diameter side of a placement area of the second chamber 62 in the fixed housing 6 through the air flow passages, and the air is circulated in the second chamber 62 while cooling the first circuit board 41.

If the air in the second chamber 62 is agitated, the heat of the air is transmitted to the fixed housing 6 and discharge of the heat to the outside air is promoted.

As described above, according to the first embodiment to which the present invention is applied, the electric motor 3 and the electric circuit board 4 are arranged in the fixed housing 6 to form a unit, and thus, are less likely to be affected by electromagnetic interference, and the electric motor 3 can be stably rotated.

Although the electric circuit board 4 is easily damaged by the heat generated by the electric motor 3 when the electric motor 3 and the electric circuit board 4 are formed as a unit, the constituent components (A1) to (A5) described above reduce the temperature difference between the first chamber 61 and the second chamber 62 forming the internal space of the fixed housing 6, and then, the heat transmitted to the fixed housing 6 is efficiently released to the outside of the fixed housing 6. Therefore, it is possible to suppress a temperature rise of the fixed housing 6 and in the internal space of the fixed housing 6 to stabilize an operation of the electric circuit board 4.

In the driving device 1 according to the first embodiment, the above-mentioned constituent components (A1) to (A5) for suppressing the temperature rise are less bulky in the rotor axis direction of the fixed housing 6 than components in an installation mode of a heat dissipation element (fan) described in conventional examples.

Therefore, the driving device 1 according to the first embodiment of the present invention can suppress in total a temperature rise of the electric circuit board 4 while suppressing an increase in size in the rotor axis direction.

A magnet 36 is mounted on an end surface of the extended part 33a of the rotor shaft 33 and a Hall element sensor 42a is arranged on the second circuit board 42 facing a surface of the magnet 36, to form a position sensor configured to detect a rotational position of the rotor shaft 33.

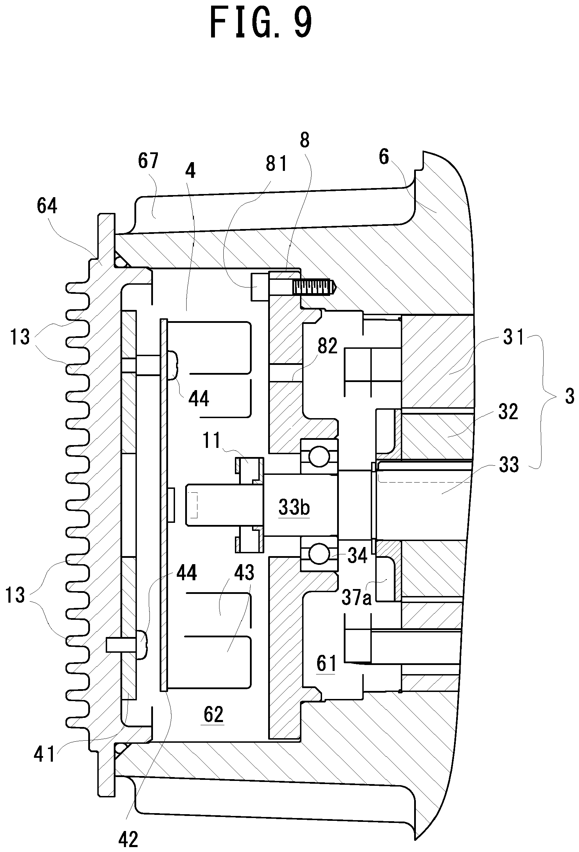

Next, a second embodiment of the driving device 1 according to the present invention will be described with reference to FIG. 9. In FIG. 9, constituent components having the same functions as the constituent components illustrated in FIGS. 1 to 8 are designated by the same reference numerals, and description thereof will be omitted.

In the second embodiment, the first circuit board 41 described in the first embodiment is not attached to the partition plate 8, but is attached to an inner surface of the first lid 64 by a fastening member (for example, a bolt 12), and a plurality of ribs 13 functioning as a second heat dissipation part are integrally provided on an outer surface of the first lid 64.

In the partition plate 8 according to the second embodiment, the mesh plate 9 and the heat insulating material 10 of the first embodiment are omitted, but the mesh plate 9 and the heat insulating material 10 may be provided. Other configurations are similar to the configurations in the first embodiment.

To prevent the heat generated by the electric motor 3 from being transmitted to the first lid 64 via the fixed housing 6, the heat insulating material 10 also serving as a gasket is interposed between an open end of the fixed housing 6 and the first lid 64.

According to the second embodiment, the first chamber 61 and the second chamber 62 communicate with each other via the through holes 82 of the partition plate 8, and thus, even if a difference between the temperature in the first chamber 61 and the temperature in the second chamber 62 occurs, such temperature difference can be reduced by an operation of the first and second blower fans 37 and 11.

According to the second embodiment, the heat generated from the electric circuit board 4 is directly transmitted to the first lid 64 in contact with the outside air, and is promptly released to the outside of the fixed housing 6 via the ribs 13. Therefore, a temperature rise of the electric circuit board 4 is suppressed. As described above, according to the second embodiment, an operation and effect comparable to the operation and effect of the first embodiment are achieved.

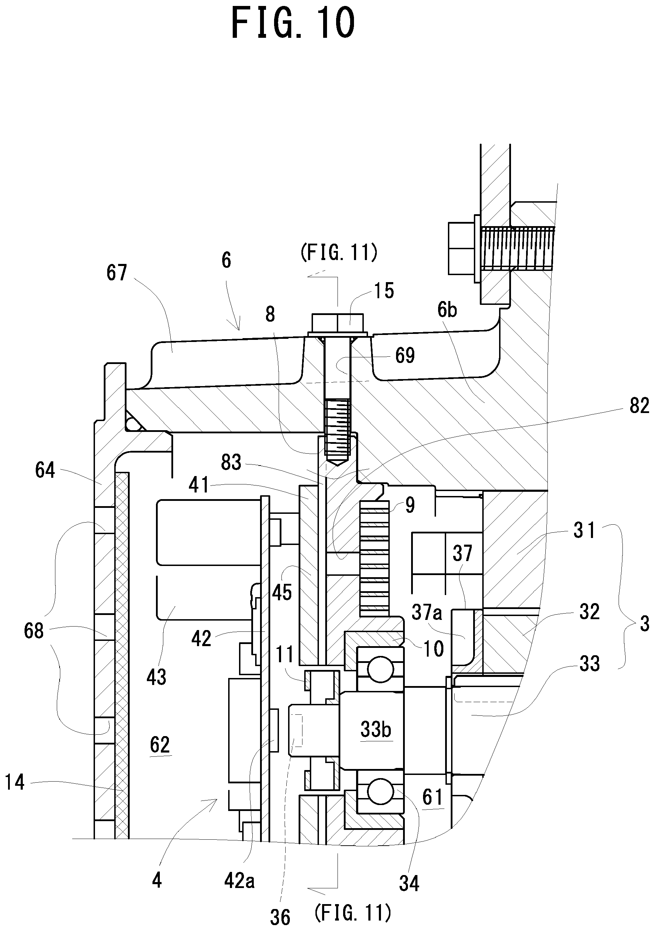

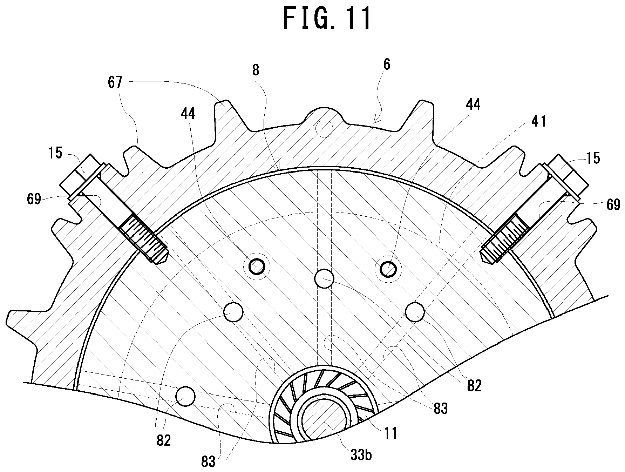

Next, a third embodiment of the driving device 1 according to the present invention will be described with reference to FIGS. 10 and 11. In FIGS. 10 and 11, constituent components having the same functions as the constituent components illustrated in FIGS. 1 to 8 are designated by the same reference numerals, and description thereof will be omitted.

In the third embodiment, the first lid 64 not attached with the electric circuit board 4, similarly to the first embodiment, is provided with a plurality of outside air intake ports 68 for communicating the second chamber 62 with the outside air, and a waterproof air-permeable sheet 14 is attached to the inner surface of the first lid 64 to cover the plurality of outside air intake ports 68. The waterproof air-permeable sheet 14 is a material not passing moisture contained in the outside air through the second chamber 62, but passing air through the second chamber 62.

The plurality of outside air intake ports 68 are formed as through holes in parallel to the rotor axis direction, and receive an air flow inside the second chamber 62 caused by the second blower fan 11 to introduce outside air into the chamber or release hot air to the outside of the chamber. At this time, moisture is removed from the outside air introduced into the chamber, and thus, the electric circuit board 4 is protected from electric short and corrosion.

In the third embodiment, a part of the partition plate 8 is further exposed to the outside of the fixed housing 6. Specifically, the outer periphery of the partition plate 8 is loosely fitted to the inner periphery of the fixed housing 6, but a bolt 15 is inserted from the outer diameter side into a through hole 69 provided to penetrate the peripheral wall 6b of the fixed housing 6 in the radial direction and is screwed into an outer peripheral portion of the partition plate 8.

The bolt 15 is preferably formed of a metal material having good thermal conductivity, such as an aluminum alloy, similarly to the partition plate 8. The heat of the partition plate 8 is efficiently released to the outside of the fixed housing 6 via the bolt 15.

As described above, the third embodiment provides an equal or higher effect of dissipating heat from the inside of the second chamber 62 to suppress a temperature rise of the driving device 1 than that of the first embodiment.

Next, a fourth embodiment of the driving device 1 according to the present invention will be described with reference to FIG. 12. In

FIG. 12, constituent components having the same functions as the constituent components illustrated in FIGS. 1 to 8 are designated by the same reference numerals, and description thereof will be omitted.

In the fourth embodiment similar to the second embodiment, the first lid 64 has a bowl shape, and the first circuit board 41 is attached to an end wall side of the first lid 64. A diameter dimension of an open end portion of the bowl coincides substantially with that of the peripheral wall 6b, and the open end portion is attached to the fixed housing 6.

To impede transmission of heat generated by the electric motor 3 from the fixed housing 6 to the first lid 64, the heat insulating material 10 formed of a glass fiber material, for example, is interposed between an open end surface of the first lid 64 and an end surface of the peripheral wall 6b of the fixed housing 6. The heat insulating material 10 is also interposed between the partition plate 8 and the fixed housing 6.

To effectively release heat trapped in the second chamber 62 from the first lid 64 to the outside air, the ribs 13 provided on the outer surface of the first lid 64 are formed in a grid pattern, and further, extend to a peripheral wall portion of the bowl by taking advantage of the shape of the bowl. As a result, compared to the second embodiment, the surface area is doubled.

In the first chamber 61 and the second chamber 62 that communicate with each other via the through holes 82 of the partition plate 8, it is possible to reduce such a temperature difference by an operation of the first and second blower fans 37 and 11.

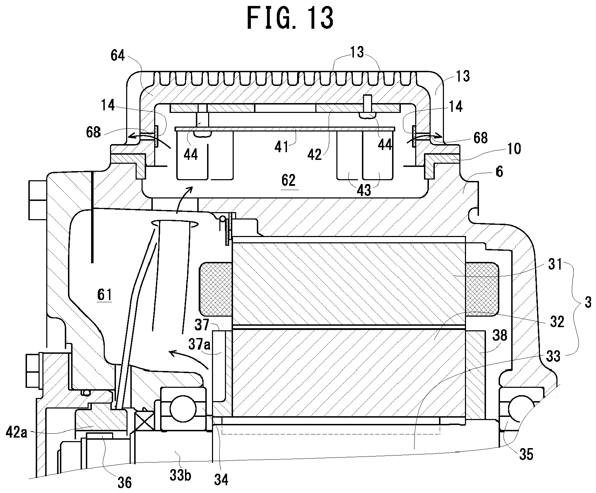

Next, a fifth embodiment of the driving device 1 according to the present invention will be described with reference to FIG. 13. In FIG. 13, constituent components having the same functions as the constituent components illustrated in FIGS. 1 to 8 are designated by the same reference numerals, and description thereof will be omitted.

In the fixed housing 6, the second chamber 62 is located above and adjacent to the first chamber 61 perpendicular to the rotor axis direction. The first lid 64 having a bowl shape forming most of the second chamber 62 is installed on an upper surface of the fixed housing 6, via the heat insulating material 10 molded in an inverted L-shape in a cross-sectional view. A plurality of openings 70 are provided on the upper surface of the fixed housing 6 corresponding to a bottom portion of the second chamber 62, and air can flow freely between the first chamber 61 and the second chamber 62. A coil wire of the stator 31 and a wiring of the Hall element sensor 42a pass through some of the openings 70 to be connected to the electric circuit board 4.

The plurality of outside air intake ports 68 are provided on a peripheral wall of the first lid 64 so that the air inside the second chamber 62 can freely flow to the outside. The waterproof air-permeable sheet 14 attached to an inner peripheral surface of the peripheral wall removes water and humidity from the outside air flowing into the second chamber 62.

The heat of the electric motor 3 generated when the rotor shaft 33 rotates is transmitted to the fixed housing 6 via the stator 31, but when the heat insulating material 10 is interposed, transmission of heat to the first lid 64 is suppressed to reduce damage to the electric circuit board 4. Even if the heat generated by the electric circuit board 4 is transmitted to the first lid 64, the heat is effectively dissipated by the cross-shaped ribs 13 formed on the outer surface of the first lid 64.

The first blower fan 37a rotates together with the rotor shaft 33, and the hot air in the first chamber 61 enters the second chamber 62 via the openings 70 and is released to the outside air via the outside air intake ports 68. The heat in the second chamber 62 is transmitted to the first lid 64 and dissipated by the ribs 13.

The present invention is not limited to the above-described embodiments, and can be appropriately modified within the scope of the claims and a scope equivalent to the scope of the claims.

(1) The driving device 1 described in each of the above embodiments may be suitably applied to a crawler traveling device mounted in a work vehicle such as an agricultural machine or a construction machine, or a recreation vehicle such as a snowmobile. However, the driving device 1 may be applied not only to the crawler traveling device, but also to a wheel-type traveling device, and may also be applied to, for example, a driving device for traveling in a construction machine such as a hydraulic excavator or a hydraulic crane.

(2) The driving device 1 described in each of the above embodiments has a configuration in which the electric motor 3 and the electric circuit board 4 are arranged in the fixed housing 6, and the reduction mechanism part 5 and the rotating housing 7 are further integrally provided. However, the configuration is not limited to this, and the present invention also includes the driving device 1 having a configuration without the reduction mechanism part 5 and the rotating housing 7.

(3) The reduction mechanism part 5 described in each of the above embodiments is not limited to three stages of the planetary gear mechanisms 51, 52, and 53, and may be a reduction mechanism having two stages or four or more stages, or another type of reduction mechanism.

(4) In each of the above embodiments, the bearings 34, 35, and 71 are deep groove ball bearings, but the bearings 34, 35, and 71 are not limited to this, and may be replaced with, for example, angular contact ball bearings, cylindrical roller bearings, tapered roller bearings, and cylindrical bushes.

(5) The present invention also includes a configuration in which the above-described constituent components (A3) to (A5) are omitted from the driving device 1 described in the first embodiment.

(6) The present invention also includes a configuration in which the through holes 82 of the partition plate 8 and the second blower fan 11 are omitted from the driving device 1 described in the second and fourth embodiments.

(7) The present invention also includes a configuration in which the above-described constituent components (A2) and (A4) are included in the driving device 1 described in the second and fourth embodiments.

(8) The present invention also includes a configuration in which the above-described constituent components (A2) and (A4) are included in the driving device 1 described in the fifth embodiment.

### [Reference Signs List]

- 1: Driving device
- 3: Electric motor
- 31: Stator
- 32: Rotor
- 33: Rotor shaft
- 33a: Extended part
- 33b: Extended part
- 34: Bearing
- 35: Bearing
- 37a: First blower fan
- 4: Electric circuit board
- 41: First circuit board
- 42: Second circuit board
- 45: Through hole
- 5: Reduction mechanism part
- 6: Fixed housing
- 6a: Peripheral wall
- 6b: Peripheral wall
- 61: First chamber
- 62: Second chamber
- 63: End wall
- 64: First lid
- 67: Fins (corresponding to heat dissipation part)
- 68: Outside air intake port
- 7: Rotating housing
- 8: Partition plate
- 82: Through hole
- 83: Groove
- 9: Mesh plate (corresponding to temperature adjusting part)
- 10: Heat insulating material
- 11: Second blower fan
- 14: Waterproof air-permeable sheet

## Claims

1. A driving device (1) comprising, a fixed housing (6) including a first chamber (61) and a second chamber (62), an electric motor (3) arranged in the first chamber (61), an electric circuit board (4) arranged in the second chamber (62) and to electrically control drive of the electric motor (3), the driving device (1) being **characterized in that,**
a lid (64) is a component of the second chamber, detachable from the fixed housing (6), wherein the electric circuit board (4) mounted on an inner surface of the lid (64); and
a heat dissipation part provided on an outer surface of the lid (64) and to release heat from the electric circuit board (4).

2. The driving device (1) according to claim 1, further comprising:
a heat insulating material (10) interposed between the fixed housing (6) and the lid (64).

3. The driving device (1) according to claim 1, wherein
the fixed housing (6) includes a peripheral wall (6b) surrounding the electric circuit board (4) and an end opening mounted with the lid (64), and
the heat dissipation part is provided on the peripheral wall (6b), and releases heat generated by the electric circuit board (4) to an outside of the fixed housing (6).

4. The driving device (1) according to claim 1, further comprising:
a through hole (82) via which the first chamber (61) and the second chamber (62) communicate with each other; and
a first blower fan (37a) provided on a rotor shaft (33) of the electric motor (3) located in the first chamber (61).

5. The driving device (1) according to claim 4, further comprising:
a partition plate (8) to partition the first chamber (61) and the second chamber (62) and to support one end portion of the rotor shaft (33),
the one end portion of the rotor shaft (33) extending into the second chamber (62); and
a second blower fan (11) provided at the one end portion of the rotor shaft (33).

6. The driving device (1) according to claim 4, further comprising:
an opening (68) provided in the second chamber (62) and via which an inside and an outside of a housing communicate with each other; and
a waterproof air-permeable sheet (14) attached to the opening (68).

7. A driving device (1) comprising, a fixed housing (6), an electric motor (3) accommodated inside the fixed housing (6) and an electric circuit board (4) to control drive of the electric motor (3), the driving device (1) being **characterized in that,**
a partition plate (8) provided inside the fixed housing (6), the partition plate (8) divided an internal space of the fixed housing (6) into a first chamber (61) arranged therein with the electric motor (3) and a second chamber (62) arranged therein with the electric circuit board (4); and
a heat dissipation part provided in a region corresponding to the second chamber (62) on an outer wall of the fixed housing (6), the heat dissipation part releasing heat generated by the electric circuit board (4) to an outside of the fixed housing (6),
wherein the partition plate (8) is formed of a metal material having good thermal conductivity and includes a first surface facing the first chamber (61) and a second surface facing the second chamber (62), and
the electric circuit board (4) is mounted on the second surface of the partition plate (8).

8. The driving device (1) according to claim 7, further comprising:
a through hole (82) opened in the partition plate (8) and via which the first chamber (61) and the second chamber (62) communicate with each other; and
a first blower fan (37a) provided on a rotor shaft (33) of the electric motor (3) located in the first chamber (61).

9. The driving device (1) according to claim 7, wherein
the partition plate (8) supports one end portion of the rotor shaft (33) via a bearing (34), and
the one end portion of the rotor shaft (33) extends into the second chamber (62), and a second blower fan (11) is provided at the one end portion of the rotor shaft (33).

10. The driving device (1) according to claim 9, further comprising:
an opening (68) provided in the second chamber (62) and via which an inside and an outside of a housing communicate with each other; and
a waterproof air-permeable sheet (14) attached to the opening (68).

11. The driving device (1) according to claim 7, wherein
the partition plate (8) rotatably supports the rotor shaft (33) via a heat insulating material (10) that suppresses heat transmission from the rotor shaft (33) to the partition plate (8).

12. The driving device (1) according to claim 7, wherein
the fixed housing (6) includes a peripheral wall (6b) forming a region corresponding to the second chamber (62), and
the heat dissipation part is formed by a plurality of fins (67) projecting outward from the peripheral wall (6b).

13. The driving device (1) according to claim 12, wherein the plurality of fins (67) extend to a region corresponding to the first chamber (61) in an axis direction on an outer periphery of the fixed housing (6).

14. The driving device (1) according to claim 7, further comprising:
a temperature adjusting part (9) provided on the first surface of the partition plate (8) and to adjust a temperature difference between the first chamber (61) and the second chamber (62).

15. The driving device (1) according to claim 7, wherein
a part of the partition plate (8) is exposed to the outside of the fixed housing (6).
